# FASCICULE DE BREVET EUROPEEN

(11) **EP 1 088 452 B1**
(45) Date de publication et mention de la délivrance du brevet: **06.11.2002**
(21) Numéro de dépôt: 98936455.9
(22) Date de dépôt: 07.07.1998
(51) Int. Cl.: H04N 7/15, H04N 7/20

(54) **SYSTEME DE VISIOCONFERENCE MULTIPOINTS PAR SATELLITE**
SYSTEM FÜR MEHRPUNKT-VIDEOKONFERENZ ÜBER SATELLIT
MULTI-POINT VIDEOCONFERENCE SYSTEM BY SATELLITE

(30) Priorité: 23.06.1998 FR 9807939
(43) Date de publication de la demande: 04.04.2001
(73) Titulaire: HC, 93330 Neuilly sur Marne (FR)
(72) Inventeur: KAN, Robert, F-93250 Villemomble (FR)
(74) Mandataire: Kohn, Philippe
(86) Numéro de dépôt international: FR9801448
(87) Numéro de publication internationale: WO99067953

(56) Documents cités:
- EP-A- 0 353 945
- EP-A- 0 563 937
- US-A- 4 360 827
- US-A- 5 729 684
- PATENT ABSTRACTS OF JAPAN vol. 018, no. 350 (E-1572), 30 juin 1994 & JP 06 090347 A (NIPPON TELEGR & TELEPH CORP), 29 mars 1994
- HERMANNS O ET AL: "PERFORMANCE INVESTIGATIONS OF THE IP MULTICAST ARCHITECTURE" COMPUTER NETWORKS AND ISDN SYSTEMS, vol. 28, no. 4, 1 février 1996, pages 429-439, XP000553069
- PATENT ABSTRACTS OF JAPAN vol. 018, no. 350 (E-1572), 30 juin 1994 & JP 06 090446 A (TOSHIBA CORP), 29 mars 1994

## Description

L'invention concerne un système de visioconférence multipoints.

L'invention se rapporte plus particulièrement à un système de visioconférence multipoints qui est destiné à permettre de relier entre elles plusieurs personnes situées en des lieux différents, au moyen de micro-ordinateurs, c'est-à-dire de machines relativement peu complexes et peu coûteuses. Le système de visioconférence multipoints a pour but de véhiculer, entre chacun des participants à la conférence, au moins une information sonore, par exemple la voix du participant, une information visuelle, par exemple une image vidéo du participant, et au moins des données que chaque participant est alors à même de visualiser.

Dans un système de visioconférence multipoints, il existe généralement un participant particulier, par exemple appelé maître, qui a la charge d'animer la conférence et de déterminer celui qui parmi les autres participants, appelés par exemple élèves, peut "prendre la parole", c'est-à-dire intervenir dans la conférence, par exemple sous la forme d'une intervention sonore et/ou visuelle et/ou sous la forme d'envoi de données.

Les participants élèves possèdent donc chacun une station élève qui se compose d'un micro-ordinateur incorporant notamment des moyens de visualisation, des moyens de capture vidéo, tels qu'une caméra, un microphone, des haut-parleurs, mais aussi des moyens de liaison qui permettent de le relier aux autres participants à la visioconférence multipoints.

Le système de visioconférence multipoints comporte un ensemble serveur qui, en fonction des ordres donnés par le maître de conférence, envoie à chacun des élèves un signal de visioconférence multipoints comportant des images vidéo, du son, et des données.

En retour, chaque station élève doit pouvoir envoyer à l'ensemble serveur au moins la parole et l'image vidéo du participant correspondant, ainsi que des données.

Tant les liaisons aller, de l'ensemble serveur vers chacune des stations élèves, que les liaisons retour, de chacune des stations élèves vers l'ensemble serveur, doivent donc pouvoir acheminer une quantité relativement importante d'informations et elles doivent donc posséder une capacité importante de débit. Dans la présente application, le signal de visioconférence multipoints, qui regroupe des informations de natures différentes (sonore, vidéo, données), est un signal numérique.

Selon une conception connue d'un système de visioconférence multipoints, chaque station élève communique avec l'ensemble serveur par le biais d'une liaison qui est réservée à cet effet pendant la durée de la visioconférence, et qui achemine les informations à l'aller et au retour. Or, une telle conception, qui forme un réseau en étoile dont le centre, ou noyau, est constitué par l'ensemble serveur, nécessite de mobiliser un nombre important de liaisons, en l'occurrence autant que de stations élèves. Or, le coût de ces liaisons est relativement important car elles doivent chacune être en mesure de transmettre l'intégralité du signal de visioconférence multipoints, c'est-à-dire qu'elle doivent chacune posséder une capacité de débit relativement importante. Cela est vrai pour les communications externes qui relient entre eux les différents sites de la visioconférence, mais, lorsque certaines des machines sont connectées à un réseau d'entreprise, cela doit aussi être vrai pour ce réseau. Notamment, si l'ensemble serveur est relié à un réseau d'entreprise par lequel transite le signal de visioconférence, le réseau risque d'être rapidement saturé, même pour un nombre peu élevé de participants à la visioconférence.

Dans le document EP-A-0 563 937, on a déjà décrit un système de communications vidéo multipoints dans lequel un satellite émet un signal vidéo synthétisé composé d'un signal vidéo produit par une station locale et d'un signal vidéo produit par un central à destination de l'ensemble des stations distantes connectées au système. Mais, on ne dispose pas de moyens permettant d'adresser l'une des stations distantes dans l'émission qui est accessible à tous.

L'invention a pour objet de proposer une nouvelle conception d'un système de visioconférence multipoints qui soit particulièrement simple et économique. Notamment, le système de visioconférence multipoints doit permettre de rassembler un nombre important de participants sans pour autant nécessiter l'immobilisation de moyens de communication trop nombreux ou trop onéreux pour assurer les liaisons, notamment entre l'ensemble serveur et chacune des stations participantes.

Dans ce but, l'invention propose un système de visioconférence multipoints, caractérisé en ce qu'il comporte notamment :
- un ensemble serveur ;
- des stations élèves ;
- une liaison aller qui transmet, de l'ensemble serveur vers chacune des stations clientes, un signal de visioconférence multipoints selon un protocole de type IP Multicast, comportant une capacité de multi-adressage de sorte que le signal de visioconférence n'est reçu que par certaines stations élèves sélectivement déterminées, la liaison aller comportant au moins une partie le long de laquelle la transmission est effectuée par satellite, le signal étant émis par un centre d'émission satellite et relayé par un satellite ;
- une liaison retour qui transmet, de chacune des stations élèves à l'ensemble serveur, un signal de visioconférence selon un protocole de type IP Unicast.Selon d'autres caractéristiques de l'invention :
- la liaison retour transmet des informations de type sonores, de type vidéo et des données, et lesdites informations sont susceptibles d'être intégrées, par l'ensemble serveur dans le signal de visioconférence multipoints qui est transmis par la liaison aller ;
- ladite partie le long de laquelle la transmission est effectuée par satellite est la partie finale, et chaque station élève comporte des moyens de réception du signal transmis par satellite.
- une liaison retour est effectuée par l'intermédiaire d'au moins une ligne d'un réseau numérique à intégration de service (RNIS/ISDN) ;
- entre l'ensemble serveur et le centre d'émission satellite, la liaison aller est effectuée par l'intermédiaire d'au moins une ligne d'un réseau numérique à intégration de services (RNIS/ISDN) ;
- entre l'ensemble serveur et le centre d'émission satellite, la liaison aller est effectuée par une transmission satellite auxiliaire ;
- l'ensemble serveur comporte au moins une station maître et une station d'administration par lesquelles un maître de conférence gère la visioconférence ;
- la station maître est délocalisée, et elle est reliée à l'ensemble serveur par une liaison aller et retour effectuée par l'intermédiaire d'au moins une ligne d'un réseau numérique à intégration de services (RNIS/ISDN) ;
- l'ensemble serveur est organisé sous la forme d'un réseau de machines ;
- l'ensemble serveur comporte, reliés en réseau, au moins une station maître, une station d'administration et un module de contrôle multipoints qui synthétise le signal de visioconférence multipoints ;
- une station élève comporte un moyen de visualisation sur laquelle est affichée une information graphique acheminée par le signal de visioconférence multipoints, l'information graphique acheminée par le signal de visioconférence multipoints, est affichée en superposition sur une image de fond précédemment stockée dans une mémoire de la station élèves ; et
- l'image de fond est transmise par la liaison aller, de l'ensemble serveur à chacune des stations élèves, avant l'établissement de la visioconférence multipoints.

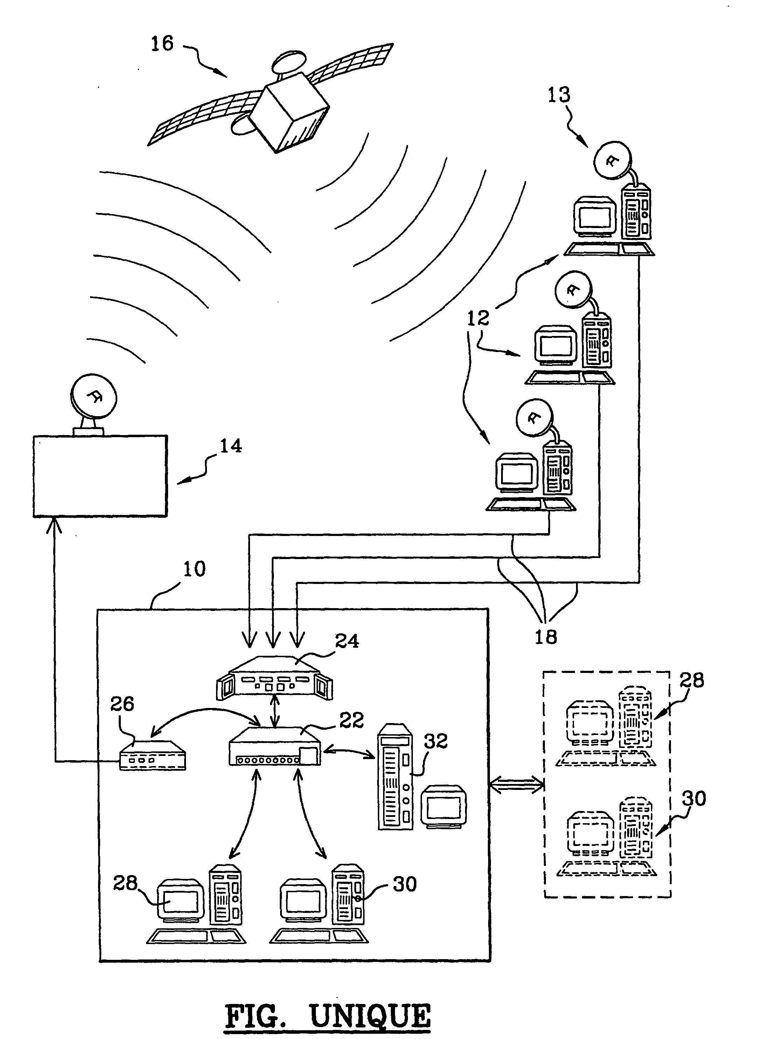

D'autres caractéristiques et avantages de l'invention apparaîtront à la lecture de la description détaillée qui suit pour la compréhension de laquelle on se reportera au dessin annexé dans lequel la figure unique est un schéma illustrant un système de visioconférence multipoints conforme aux enseignements de l'invention.

Dans le système de visioconférence multipoints selon l'invention, on peut voir sur la figure unique qu'il est prévu un ensemble serveur 10 dont le rôle principal est de collecter et rassembler des signaux en provenance de chacune d'une série de stations élèves 12, et de synthétiser un signal de visioconférence multipoints qui achemine, en combinaison, des informations de type sonore, de type vidéo mais aussi de type données numériques, ce signal de visioconférence multipoints étant transmis à chacune des stations élèves 12 par l'intermédiaire d'une liaison dite liaison aller.

Selon un aspect de l'invention, la liaison aller, par laquelle le signal de visioconférence multipoints est transmis de l'ensemble serveur 10 à chacune des stations élèves 12, est réalisée au moins en partie grâce à une transmission par satellite. Ainsi, le système de visioconférence multipoints fait appel à un centre d'émission 14 qui émet le signal de visioconférence multipoints en direction d'un satellite 16 qui relaye ce signal en direction de la terre de manière qu'il puisse être capté par chacune des stations élèves 12.

Chaque station élève 12 est donc pourvue de moyens de réception 13 comportant une antenne et un circuit électronique de décodage du signal satellite.

Les stations élèves 12 sont des stations de type micro-ordinateurs, notamment de type "PC", équipés entre autres d'une unité centrale de traitement, de moyens de stockage de données tels qu'un disque dur, de moyens d'affichage tels qu'un écran, de haut-parleurs, mais aussi de moyens d'acquisition tels qu'un microphone, une caméra, et un clavier.

La station élève 12 est donc munie de moyens de restitution qui permettent à chaque participant de prendre connaissance du contenu du signal de visioconférence multipoints et de moyens d'acquisition qui lui permettent de transmettre à l'ensemble serveur des informations susceptibles d'être incorporées dans ce signal.

Chacune des stations élèves 12 est susceptible d'être reliée à un point d'entrée du réseau de l'ensemble serveur 10 par une liaison retour 18 qui est par exemple une liaison par un réseau numérique à intégration de services (RNIS/ISDN). Bien entendu, cette liaison retour peut aussi être assurée au travers d'une ligne du réseau téléphonique commuté classique ou au travers d'un réseau de type internet ou intranet. Toutefois, une liaison de type RNIS/ISDN permet de garantir un débit de transmission optimum pour acheminer, en temps réel et avec un minimum d'erreurs, des informations sonores et vidéo et des données depuis la station élève 12 jusqu'à l'ensemble serveur 10.

Comme on peut le voir sur la figure unique, l'ensemble serveur 10 est organisé selon un réseau interne. Ce réseau interne comporte notamment un noeud d'interconnexion 22 qui permet de relier entre elles toutes les machines du réseau.

Parmi ces machines, on trouve un serveur d'accès distant 24 qui constitue une "porte d'entrée" du réseau interne sur laquelle arrivent chacune des liaisons retour 18 en provenance des stations élèves 12. On trouve aussi un routeur 26 qui constitue une "porte de sortie" du réseau interne par laquelle transite le signal de visioconférence multipoints en direction du réseau numérique à intégration de services (RNIS/ISDN) qui est bien entendu un réseau externe à l'ensemble serveur 10.

Par ailleurs, l'ensemble serveur 10 comporte aussi une station maître 28 et une station d'administration 30 qui sont chacune reliées au réseau et qui permettent au maître de conférence de diriger la conférence.

Plus précisément, la station maître 28 comporte les mêmes moyens d'acquisition et de restitution qu'une station élève 12 pour permettre au maître de conférence de participer à celle-ci en intervenant et en visualisant les élèves et les documents. La station d'administration a essentiellement pour but de permettre au maître de conférence, ou à un assistant, de gérer les interventions des différents participants à la conférence.

Enfin, l'ensemble serveur comporte un module de contrôle multipoints (ci-après désigné MCM) 32 qui est bien entendu relié au réseau interne de l'ensemble serveur et qui, en fonction des ordres donnés par le maître de conférence grâce à la station d'administration 30, synthétise notamment le signal de visioconférence multipoints.

On a vu que, dans le système selon l'invention, l'ensemble serveur 10 est organisé en un réseau. L'ensemble des machines qui le constitue peut donc se trouver réuni géographiquement dans un même lieu, mais on peut aussi prévoir que certaines des machines soient délocalisées.

Ainsi, on peut avantageusement prévoir que le maître de conférence participe à la conférence sans avoir à se déplacer sur le lieu où se trouvent notamment le serveur d'accès distants 24 et le MCM 32. Il suffit en effet qu'il ait à sa disposition une station maître 28 et, de préférence, une station d'administration 30 reliées par des moyens adéquats au réseau de l'ensemble serveur ainsi que cela est représenté en pointillés sur la figure. Par exemple, on pourra utiliser, pour relier chacune de ces deux machines au réseau de l'ensemble serveur 10, une liaison par un réseau numérique à intégration de services RNIS/ISDN, en utilisant éventuellement trois lignes couplées d'un tel réseau pour obtenir un débit optimum de transmission.

On notera par ailleurs qu'il est possible de prévoir plusieurs postes maîtres situés sur des sites différents, chacun reliés à l'ensemble serveur par une liaison aller/retour à haut débit. Il suffira alors qu'il y ait une station d'administration unique qui détermine lequel de ces postes est actif à un instant donné.

Dans l'exemple de réalisation du système qui est illustré sur la figure, l'ensemble serveur 10 est relié au centre d'émission satellite 14 par une liaison utilisant trois lignes numériques d'un réseau numérique à intégration de services (RNIS/ISDN) permettant d'obtenir un débit de transmission de 384 kilo octets par seconde. Toutefois, on pourrait également prévoir un autre type de liaison, et notamment une liaison satellite auxiliaire, par exemple de type KA.

Selon l'invention, le signal de visioconférence multipoints qui est synthétisé par l'ensemble serveur 10 pour être émis en direction des stations élèves 12, par l'intermédiaire de la liaison satellite, est régi par un protocole de type "IP Multicast" (protocole internet multipoints) basé sur la norme RFC 1112.

Ce protocole permet qu'un message unique soit adressé, de manière automatique, a différents destinataires. Ces capacités de multi-adressage sont donc particulièrement intéressantes en ce qu'elles permettent, dans l'exemple selon l'invention, de n'utiliser, en sortie de l'ensemble serveur 10, qu'une seule liaison, indépendamment du nombre de stations élèves 12. Avantageusement, la liaison par satellite sera telle que, par un contrôle d'adressage, on puisse s'assurer que le signal de visioconférence n'est reçu que par certaines stations élèves sélectivement déterminées.

Ainsi, l'utilisation d'un protocole de type IP Multicast permet d'exploiter pleinement la liaison satellite qui, à partir d'un point unique d'émission, c'est-à-dire le centre d'émission 14, permet d'envoyer un même signal en direction d'un nombre illimité de destinataires, pourvu que ceux-ci soient dans la zone de couverture du satellite 16.

Au contraire, le signal qui est émis par chacune des stations élèves 12 en direction de l'ensemble serveur 10 est un signal qui est émis selon un protocole de type IP Unicast puisque chacune des liaisons retour est de toutes façons une liaison point à point entre la station élève 12 et l'ensemble serveur 10.

Là encore, l'utilisation d'un protocole standardisé présente le grand avantage de permettre l'utilisation du système de visioconférence multipoints selon l'invention en utilisant d'autres lignes que des lignes RNIS pour assurer la liaison retour, même si de telles liaisons RNIS permettent le fonctionnement optimum du système.

Selon un autre aspect de l'invention, on a vu que le signal de visioconférence multipoints achemine des données autres que l'information sonore et que l'information vidéo.

Ces données peuvent constituer un document de travail dont tous les participants doivent pouvoir visualiser le contenu en même temps. Il peut ainsi notamment s'agir d'un support de présentation analogue à une "diapositive" qui serait projetée sur un écran dans une salle conférence.

Au cours d'une visioconférence multipoints, il peut être nécessaire d'afficher successivement un grand nombre de "diapositives".

Dans les dispositifs connus jusqu'à présent, chaque "diapositive" est envoyée avec le signal de visioconférence multipoints au moment précis où le maître de conférence souhaite la faire afficher sur chacune des stations élèves. Or, ces données sont généralement des images graphiques relativement complexes qui, sous leur format informatique numérisé, constituent des fichiers de grande taille dont la transmission par la liaison aller peut prendre plusieurs secondes voire plusieurs minutes, même s'il s'agit d'une liaison à haut débit. Or, un tel délai est inacceptable dans beaucoup de cas.

Aussi, dans le système de visioconférence multipoints selon l'invention, il est prévu que, préalablement au début de la conférence, l'ensemble serveur 10 envoie, par le biais de la liaison aller, l'intégralité des fichiers informatiques constituant chacune des "diapositives", ces fichiers étant stockés par exemple sur le disque dur de chaque station élève 12 participant à la visioconférence multipoints.

Ainsi, en préalable à la conférence, chaque participant est tenu de se connecter à l'ensemble serveur 10 pour "annoncer" sa participation, et l'ensemble serveur lui transmet alors, de préférence en un bloc, l'ensemble des données qui sont destinées à former ces "diapositives". Ce transfert de fichiers, qui s'effectue aussi selon un protocole IP Multicast, est effectué simultanément pour tous les participants de sorte que chaque fichier ne transite, sauf incident de transmission, qu'une seule fois par la liaison aller. De préférence, on utilisera alors une technique de liaison par transmission de paquets.

Là encore, l'utilisation du protocole IP Multicast permet de limiter de manière très importante la capacité de débit que doit présenter la liaison aller, capacité qui est alors indépendante du nombre de participants. L'avantage conféré sera donc d'autant plus important qu'il y a un nombre élevé de participants à la conférence.

Au cours de la conférence, il suffit donc au maître de conférence de commander les stations élèves 12 pour qu'elles provoquent l'affichage, à un instant donné, d'une des images préalablement stockées sur le disque dur de chaque station 12. Cet affichage s'effectue très rapidement car il n'est pas affecté par les temps de transmission entre l'ensemble serveur 10 et chacune des stations élèves 12, le signal de commande de cet affichage étant très court et reçu quasi instantanément.

Toutefois, le système selon l'invention permet aussi de transmettre un ou plusieurs fichiers "diapositive" en cours de visioconférence.

Par ailleurs, il est prévu que le signal de visioconférence multipoints comporte une information de présentation qui permet, à l'initiative du maître de la conférence ou d'un des élèves, de provoquer l'affichage, au niveau de chacune des stations élèves 12, d'une représentation graphique en superposition sur une image de fond constituée par l'un des fichiers "diapositive" qui aura été précédemment stocké sur le disque dur des stations élèves 12 en préalable à la conférence.

Cette information de présentation peut par exemple être un simple trait destiné à souligner ou à entourer une partie de l'image de fond qui est déjà affichée par chacune des stations élèves, mais on peut aussi utiliser une figure géométrique telle qu'un rectangle, un cercle ou une tache de couleur pour mettre en valeur une partie de cette image de fond.

Ces informations de présentation peuvent être transmises par le signal de visioconférence multipoints de manière très concise, sous la forme de simples coordonnées, de sorte qu'elles ne surchargent pas la liaison.

L'information de présentation peut aussi comprendre du texte.

Avantageusement, un élève pourra aussi transmettre au maître de conférence de telles informations de présentation. Ce dernier peut alors éventuellement décider d'intégrer ces informations au signal de visioconférence multipoints pour qu'elles soient retransmises à tous les participants.

Ainsi, le système de visioconférence selon l'invention est un système à faible coût qui permet d'établir des visioconférences de très bonne qualité, notamment en ce qui concerne les informations sonores et vidéo.

En effet, il fait appel à des matériels relativement peu onéreux puisque les stations élèves 12, la station maître 28, la station d'administration 30 et le MCM 32 peuvent être constitués par des micro-ordinateurs de type "PC" munis de logiciels adéquats. Ces matériels, ainsi que le routeur 26 et le serveur d'accès distant 24 sont des produits largement répandus et donc relativement peu chers comparé aux systèmes classiques nécessaires à la mise en oeuvre de visioconférences de qualité.

Le réseau interne de l'ensemble serveur 10 est un réseau du type connu sous la dénomination commerciale "ETHERNET", lui aussi largement répandu.

Surtout, le système selon l'invention utilise des liaisons qui, tant à l'aller qu'au retour, permettent d'obtenir à moindre frais un débit de transmission optimum en fonction du volume d'informations à transmettre.

## Revendications

1. Système de visioconférence multipoints, **caractérisé en ce qu'**il comporte notamment:
- un ensemble serveur (10) ;
- des stations élèves (12) ;
- une liaison aller qui transmet, de l'ensemble serveur (10) vers chacune des stations clientes (12), un signal de visioconférence multipoints selon un protocole de type IP Multicast, comportant une capacité de multi-adressage de sorte que le signal de visioconférence n'est reçu que par certaines stations élèves sélectivement déterminées, la liaison aller comportant au moins une partie le long de laquelle la transmission est effectuée par satellite, le signal étant émis par un centre d'émission satellite (14) et relayé par un satellite (16) ;
- une liaison retour qui transmet, de chacune des stations élèves (12) vers l'ensemble serveur (10), un signal de visioconférence selon un protocole de type IP Unicast.

2. Système de visioconférence multipoints selon la revendication 1, **caractérisé en ce que** la liaison retour transmet des informations de type sonores, de type vidéo et des données, et **en ce que** lesdites informations sont susceptibles d'être intégrées, par l'ensemble serveur (10) dans le signal de visioconférence multipoints qui est transmis par la liaison aller.

3. Système de visioconférence multipoints selon l'une des revendications 1 ou 2, **caractérisé en ce que** ladite partie le long de laquelle la transmission est effectuée par satellite est la partie finale, et **en ce que** chaque station élève (12) comporte des moyens de réception (13) du signal transmis par satellite.

4. Système de visioconférence multipoints selon l'une quelconque des revendications précédentes, **caractérisé en ce qu'**une liaison retour (18) est effectuée par l'intermédiaire d'au moins une ligne d'un réseau numérique à intégration de service (RNIS/ISDN).

5. Système de visioconférence multipoints selon l'une quelconque des revendications précédentes, **caractérisé en ce que**, entre l'ensemble serveur (10) et le centre d'émission satellite (14), la liaison aller est effectuée par l'intermédiaire d'au moins une ligne d'un réseau numérique à intégration de services (RNIS/ISDN).

6. Système de visioconférence multipoints selon l'une quelconque des revèndications 1 à 4, **caractérisé en ce que**, entre l'ensemble serveur (10) et le centre d'émission satellite (14), la liaison aller est effectuée par une transmission satellite auxiliaire.

7. Système de visioconférence multipoints selon l'une quelconque des revendications précédentes, **caractérisé en ce que** l'ensemble serveur (10) comporte au moins une station maître (28) et une station d'administration (30) par lesquelles un maître de conférence gère la visioconférence.

8. Système de visioconférence multipoints selon la revendication 7, **caractérisé en ce que** la station maître (28) est délocalisée, et **en ce qu'**elle est reliée à l'ensemble serveur (10) par une liaison aller et retour effectuée par l'intermédiaire d'au moins une ligne d'un réseau numérique à intégration de services (RNIS/ISDN).

9. Système de visioconférence multipoints l'une des revendications 7 ou 8, **caractérisé en ce que** l'ensemble serveur (10) est organisé sous la forme d'un réseau de machines.

10. Système de visioconférence multipoints selon la revendication 9, **caractérisé en ce que** l'ensemble serveur (10) comporte, reliés en réseau, au moins une station maître (28), une station d'administration (30) et un module de contrôle multipoints (32) qui synthétise le signal de visioconférence multipoints.

11. Système de visioconférence multipoints selon l'une quelconque des revendications précédentes, **caractérisé en ce qu'**une station élève (12) comporte un moyen de visualisation sur laquelle est affichée une information graphique acheminée par le signal de visioconférence multipoints, **en ce que** l'information graphique acheminée par le signal de visioconférence multipoints, est affichée en superposition sur une image de fond précédemment stockée dans une mémoire de la station élève (12).

12. Système de visioconférence multipoints selon la revendication 11, **caractérisé en ce que** l'image de fond est transmise par la liaison aller, de l'ensemble serveur (10) à chacune des stations élèves (12), avant l'établissement de la visioconférence multipoints.

## Claims

1. Multipoint videoconferencing system, **characterised in that** it comprises, in particular:
- a server unit (10);
- student stations (12);
- an outward link which transmits, from the server unit (10) to each of the user stations (12), a multipoint videoconferencing signal according to a protocol of the IP Multicast type, comprising a multi-addressing capacity such that the videoconferencing signal is only received by certain selectively determined student stations, the outward link comprising at least one section along which transmission is effected by satellite, the signal being emitted by a satellite broadcasting centre (14) and relayed by a satellite (16);
- a return link which transmits, from each of the student stations (12) to th e server unit (10), a videoconferencing signal according to a protocol of the IP Unicast type.

2. Multipoint videoconferencing system according to claim 1, **characterised in that** the return link transmits information of the audio type and video type and da ta, and **in that** said information is capable of being integrated by the server unit (10) in the multipoint videoconferencing signal which is transmitted by the outward link.

3. Multipoint videoconferencing system according to either of claims 1 or 2, chara cterised in that said section along which transmission is made by satellite is the final section and in that each student station (12) comprises means (13) for receiving the signal transmitted by satellite.

4. Multipoint videoconferencing system according to any one of the preceding claims, **characterised in that** a return link (18) is provided via at least one integrated services digital network line (RNIS/ISDN).

5. Multipoint videoconferencing system according to any one of the preceding claims, **characterised in that**, between the server unit (10) and the satellite emission centre (14), the outward link is provided via at least one integrated services digital network line (RNIS/ISDN).

6. Multipoint videoconferencing system according to any one of claims 1 to 4, **characterised in that**, between the server unit (10) and the satellite emission centre (14), the outward link is provided by an auxiliary satellite transmission.

7. Multipoint videoconferencing system according to any one of the preceding claims, **characterised in that** the server unit (10) comprises at least one master station (28) and one administration station (30), by means of which a conference master manages the videoconference.

8. Multipoint videoconferencing system according to claim 8, **characterised in that** the master station (28) is relocated and **in that** it is connected to the server unit (10) by an outward and return link carried out via at least one integrated services digital network line (RNIS/ISDN).

9. Multipoint videoconferencing system according to either of claims 7 or 8, **characterised in that** the server unit (10) is organised in the form of a machine network.

10. Multipoint videoconferencing system according to claim 9, **characterised in that** the server unit (10), connected in a network, comprises at least one master station (28), one administration station (30) and one multipoint control module (32) which synthesises the multipoint videoconferencing signal.

11. Multipoint videoconferencing system according to any one of the preceding claims, **characterised in that** a student station (12) comprises a display means on which is displayed graphic information carried by the multipoint videoconferencing signal, **in that** the graphic information carried by the multipoint videoconferencing signal is displayed superimposed on a background image previously stored in a memory of the student station (12).

12. Multipoint videoconferencing system according to claim 11, **characterised in that** the background image is transmitted by the outward link, from the server unit (10) to each of the student stations (12), before the multipoint videoconference is established.

## Patentansprüche

1. Mehrpunkt-Videokonferenzsystem, gekennzeichnet insbesondere durch:
- eine Serveranordnung (10);
- Slave-Stationen (12);
- eine Hin-Verbindung, die von der Serveranordnung (10) an jede der Client-Stationen (12) ein Mehrpunkt-Videokonferenzsignal nach einem Protokoll vom IP-Multicast-Typ überträgt, das eine Mehradressfähigkeit derart aufweist, dass das Videokonferenzsignal nur von bestimmten selektiv festgelegten Slave-Stationen empfangen wird, wobei die Hinverbindung wenigstens einen Teil umfasst, auf dem die Übertragung über Satellit erfolgt, wobei das Signal von einem Satellitensendezentrum (14) gesendet und von einem Satelliten (16) weitergegeben wird;
- eine Rück-Verbindung, die von jeder der Slave-Stationen (12) an die Serveranordnung (10) ein Videokonferenzsignal nach einem Protokoll vom IP-Unicast-Typ überträgt.

2. Mehrpunkt-Videokonferenzsystem nach Anspruch 1, **dadurch gekennzeichnet, dass** die Rück-Verbindung Informationen vom Typ Ton, vom Typ Video und Daten überträgt, und dass die Informationen durch die Serveranordnung (10) in das Mehrpunkt-Videokonferenzsignal integrierbar sind, das auf der Hin-Verbindung übertragen wird.

3. Mehrpunkt-Videokonferenzsignal nach Anspruch 1 oder 2, **dadurch gekennzeichnet, dass** der Teil, auf dem die Übertragung per Satellit durchgeführt wird, der Endteil ist, und dass jede Slave-Station (12) Empfangsmittel (13) für das über Satelliten übertragene Signal umfasst.

4. Mehrpunkt-Videokonferenzsystem nach einem beliebigen der vorhergehenden Ansprüche, **dadurch gekennzeichnet, dass** eine Rück-Verbindung (18) über wenigstens eine Leitung eines dienstintegrierenden digitalen Netzes (ISDN) stattfindet.

5. Mehrpunkt-Videokonferenzsystem nach einem beliebigen der vorhergehenden Ansprüche, **dadurch gekennzeichnet, dass** zwischen der Serveranordnung (10) und dem Satellitensendezentrum (14) die Hin-Verbindung über wenigstens eine Leitung eines dienstintegrierenden digitalen Netzes (ISDN) erfolgt.

6. Mehrpunkt-Videokonferenzsystem nach einem beliebigen der Ansprüche 1 bis 4, **dadurch gekennzeichnet, dass** zwischen der Serveranordnung (10) und dem Satellitensendezentrum (14) die Hin-Verbindung über eine Hilfs-Satellitenübertragung erfolgt.

7. Mehrpunkt-Videokonferenzsystem nach einem beliebigen der vorhergehenden Ansprüche, **dadurch gekennzeichnet, dass** die Serveranordnung (10) wenigstens eine Master-Station (28) und eine Verwaltungsstation (30) umfasst, über die ein Moderator die Videokonferenz leitet.

8. Mehrpunkt-Videokonferenzsystem nach Anspruch 7, **dadurch gekennzeichnet, dass** die Master-Station (28) delokalisiert ist, und dass sie mit der Serveranordnung (10) durch eine Hin- und Rück-Verbindung verbunden ist, die über wenigstens eine Leitung eines dienstintegrierenden digitalen Netzes (ISDN) erfolgt.

9. Mehrpunkt-Videokonferenzsystem nach Anspruch 7 oder 8, **dadurch gekennzeichnet, dass** die Serveranordnung (10) in Form eines Maschinennetzes organisiert ist.

10. Mehrpunkt-Videokonferenzsystem nach Anspruch 9, **dadurch gekennzeichnet, dass** die Serveranordnung (10), in einem Netz verbunden, wenigstens eine Master-Station (28), eine Verwaltungsstation (30) und ein Mehrpunkt-Steuermodul (32) umfasst, das das Mehrpunkt-Videokonferenzsignal synthetisiert.

11. Mehrpunkt-Videokonferenzsystem nach einem beliebigen der vorhergehenden Ansprüche, **dadurch gekennzeichnet, dass** eine Slave-Station (12) ein Anzeigemittel umfasst, auf dem eine über das Mehrpunkt-Videokonferenzsignal beförderte graphische Information angezeigt wird, und dass die durch das Mehrpunkt-Videokonferenzsignal beförderte graphische Information einem zuvor in einem Speicher der S1ave-Station (12) gespeicherten Hintergrundbild überlagert anzeigt wird.

12. Mehrpunkt-Videokonferenzsystem nach Anspruch 11, **dadurch gekennzeichnet, dass** das Hintergrundbild über die Hin-Verbindung von der Serveranordnung (10) an jede der Slave-Stationen (12) vor Einrichtung der Mehrpunkt-Videokonferenz übertragen wird.
